# EUROPEAN PATENT SPECIFICATION

(11) **EP 3 319 282 B1**
(45) Date of publication and mention of the grant of the patent: **25.09.2019**
(21) Application number: 16829720.8
(22) Date of filing: 24.06.2016
(51) Int. Cl.: H04L 12/721, H04L 12/24, H04L 12/801, G06F 9/455

(54) **FLOW CONTROL METHOD AND DEVICE UNDER NFV ARCHITECTURE**
FLUSSSTEUERUNGSVERFAHREN UND -VORRICHTUNG UNTER EINER NFV-ARCHITEKTUR
DISPOSITIF ET PROCÉDÉ DE COMMANDE DE FLUX SOUS UNE ARCHITECTURE DE VIRTUALISATION DE FONCTIONS DE RÉSEAU (NFV)

(30) Priority: 28.07.2015 CN 201510451570
(43) Date of publication of application: 09.05.2018
(73) Proprietor: Huawei Technologies Co., Ltd., Longgang District Shenzhen, Guangdong 518129 (CN)
(72) Inventor: LIU, Xiaojun, Shenzhen Guangdong 518129 (CN)
(74) Representative: Thun, Clemens
(86) International application number: PCT/CN2016/087080
(87) International publication number: WO 2017/016354

(56) References cited:
- WO-A1-2015/099036
- CN-A- 1 154 772
- CN-A- 102 075 437
- CN-A- 102 594 669
- CN-A- 104 137 482
- CN-A- 104 601 492
- CN-A- 105 162 716
- US-A1- 2014 146 708
- "Network Functions Virtualisation (NFV); Management and Orchestration", ETSI DRAFT; ETSI GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG - NFV, no. V-MAN 001 V1.1.1 30 December 2014 (2014-12-30), pages 1-184, XP014311783, Retrieved from the Internet: URL:docbox.etsi.org\ISG\NFV\Open\Publicati ons_pdf\Specs-Reports\NFV-MAN 001v1.1.1 - GS - Management and Orchestration.pdf [retrieved on 2014-12-30]
- "Network Function Virtualisation (NFV); Resiliency Requirements;NFV-REL001v013-Resiliency Requirements", ETSI DRAFT; NFV-REL001V013-RESILIENCY REQUIREMENTS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.1.3, 13 June 2014 (2014-06-13), pages 1-68, XP014184873, [retrieved on 2014-06-13]
- Wouter Tavernier ET AL: "UNIFY unifying cloud and carrier networks D3.1 Programmability framework version 1.0", , 14 November 2014 (2014-11-14), pages 1-203, XP055224703, Retrieved from the Internet: URL:https://www.fp7-unify.eu/files/fp7-uni fy-eu-docs/Results/Deliverables/UNIFY_D3.1 Programmability framework.pdf [retrieved on 2015-10-30]

## Description

### TECHNICAL FIELD

Embodiments of the present invention relate to the field of communications technologies, and in particular, to a flow control method and apparatus under an NFV architecture.

### BACKGROUND

EP 3 089 032 A1 refers to a virtual server for executing a communication process implemented on virtualization resources without being inefficient even when different virtualization resource management schemes are included. There is provided a management system included in a mobile communication system configured to include an NFVI, which is virtualization resources including a physical server in which a VNF to execute a communication process is generated and includes a VNFM for managing the VNF, a VIM for managing the virtualization resources of the NFVI, and an orchestrator for managing all the virtualization resources of the NFVI, wherein the orchestrator includes a virtual server generation request section configured to input detailed information for implementing the VNF retained by the VNFM, rewrite the input detailed information according to a virtualization resource management scheme by the VIM, and request the VIM to generate the VNF.

Under a network functions virtualization (Network Function Virtualization, NFV) architecture, a network element function is implemented by software that runs on a virtual resource, that is, a virtualized network function (VNF, Virtualized Network Function). In this manner, multiple network elements can simultaneously run in a system to provide different services. To improve system reliability and ensure quality of service, an NFV system needs to perform flow control when a high-traffic burst causes congestion of a physical resource. Currently, flow control for an Ethernet port is mainly performed by using a conventional flow control mechanism, that is, when high service traffic causes resource congestion, flow control is performed for all services without service differentiation. This impairs an important service and reduces system reliability.

### SUMMARY

In view of this, embodiments of the present invention provide a flow control method and apparatus under an NFV architecture, so as to ensure normal running of an important service and improve system reliability in impact of a high-traffic burst under the NFV architecture.

In a first aspect a flow control method performed by a virtualized infrastructure manager, VIM, under a network functions virtualization, NFV, architecture, is provided, the method comprising:
- virtualizing a physical resource into multiple virtual resources that are used to independently run services, and dividing the physical resource into multiple sub physical resources, wherein, for each virtual resource among the multiple virtual resources, there is a correspondence between the virtual resource and at least one sub physical resource among the multiple sub physical resources, wherein the physical resource is one of a computing resource, a storage resource or a network resource;
- obtaining, for each virtual resource, a preset mapping relationship between a service priority and the virtual resource from a network function virtualization orchestrator, NFVO;
- setting, for each virtual resource, a priority for the virtual resource according to the preset mapping relationship between the service priority and the virtual resource; and
- when a service traffic burst causes congestion of the physical resource, increasing a quantity of sub physical resources that are correspondingly used by a virtual resource with a priority higher than a preset priority threshold, and decreasing a quantity of sub physical resources that are correspondingly used by a virtual resource with a priority lower than the preset priority threshold.

In a first implementation form of the first aspect the correspondence between the virtual resource and the at least one sub physical resource comprises:
one virtual resource corresponds to one sub physical resource, or one virtual resource corresponds to multiple sub physical resources, or multiple virtual resources correspond to one sub physical resource, or multiple virtual resources correspond to multiple sub physical resources.

In a second implementation form of the first aspect the setting, for each virtual resource, the priority for the virtual resource according to the preset mapping relationship between the service priority and the virtual resource comprises:
setting the priority of the virtual resource to be the same as a corresponding service priority.

In a second aspect a virtualized infrastructure manager, VIM, under a network functions virtualization, NFV, architecture is provided, wherein the VIM is configured and intended to perform any of the above methods.

It can be learned from the foregoing technical solutions that the embodiments of the present invention have the following advantages:
In the embodiments of the present invention, a priority may be set for a virtual resource by setting a mapping relationship between a service priority and the virtual resource. There is a correspondence between the virtual resource and a sub physical resource, and when a service traffic burst causes resource congestion, the sub physical resource that is correspondingly used by the virtual resource may be controlled according to the correspondence between the virtual resource and the sub physical resource and the priority of the virtual resource corresponding to a to-be-accessed service. In this way, flow control based on a service priority is implemented, and a problem that it is difficult to directly perform flow control according to a service priority because an underlying resource cannot perceive a service after layers of an NFV system are decoupled is resolved; and normal running of an important service can be ensured, and system reliability can be improved. In addition, because each virtual resource may be used to independently run a service, services can be separated from each other when the services run on a sub physical resource corresponding to a virtual resource. Therefore, mutual interference generated when multiple services simultaneously run on a same physical resource is avoided.

The invention is defined by the appended claims.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an embodiment of a flow control method under an NFV architecture according to the present invention;
FIG. 2 is a schematic diagram of an embodiment of a flow control apparatus under an NFV architecture according to the present invention; and
FIG. 3 is a schematic diagram of another embodiment of a flow control apparatus under an NFV architecture according to the present invention.

### DESCRIPTION OF EMBODIMENTS

The following describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

Embodiments of the present invention provide a flow control method and apparatus under an NFV architecture, so as to ensure normal running of an important service and improve system reliability when a service traffic burst causes congestion of a physical resource.

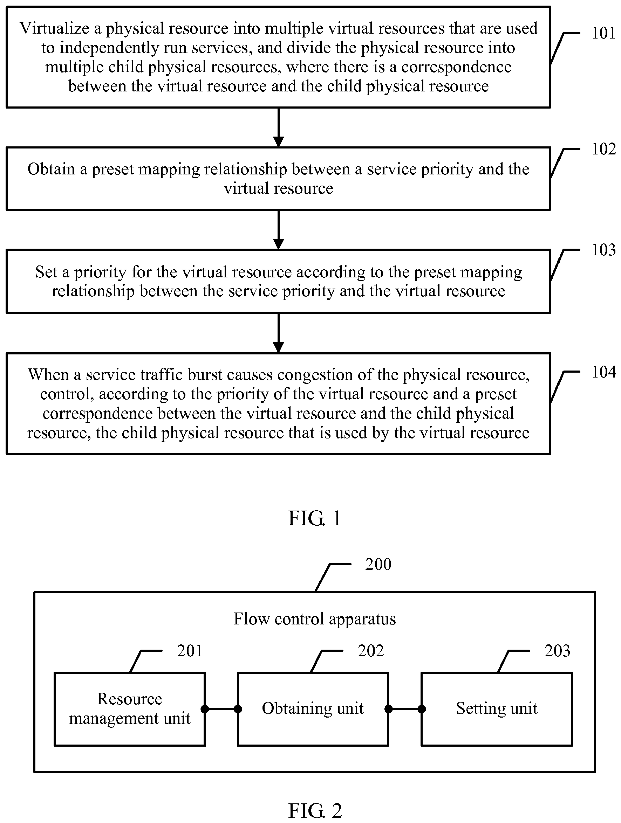

Referring to FIG. 1, an embodiment of a flow control method under an NFV architecture in the present invention includes the following steps.

Step 101: Virtualize a physical resource into multiple virtual resources that are used to independently run services, and divide the physical resource into multiple sub physical resources, where there is a correspondence between the virtual resource and the sub physical resource.

In specific implementation, the correspondence between the virtual resource and the sub physical resource may include: one virtual resource corresponds to one sub physical resource (that is, one-to-one), and/or one virtual resource corresponds to multiple sub physical resources (that is, one-to-many), and/or multiple virtual resources correspond to one sub physical resource (that is, many-to-one), and/or multiple virtual resources correspond to multiple sub physical resources (that is, many-to-many). The correspondence may be preset by a flow control apparatus, and specifically, which correspondence is to be preset may be determined according to an actual service status.

The physical resource includes but is not limited to a computing computing resource, a storage storage resource, or a network network resource.

Step 102: Obtain a preset mapping relationship between a service priority and the virtual resource.

In specific implementation, the mapping relationship between the service priority and the virtual resource may be preset by a network functions virtualization orchestrator (Network Function Virtualization Orchestrator, NFVO), and the flow control apparatus may obtain the mapping relationship from the NFVO. Specifically, the flow control apparatus may obtain, by using a standard interface NFVO-Vi, the mapping relationship that is between the service priority and the virtual resource and that is set by the NFVO. The mapping relationship between the service priority and the virtual resource may indicate a virtual resource that can be correspondingly used by a service with a specific priority.

Step 103: Set a priority for the virtual resource according to the mapping relationship between the service priority and the virtual resource.

A specific setting method may be as follows:
setting the priority of the virtual resource to be the same as a corresponding service priority. For example, if there is a mapping relationship between a virtual resource a and a service priority 2, a priority of the virtual resource a corresponding to the service priority 2 may be set to 2; and if there is a mapping relationship between a service priority 4 and a virtual resource b, a priority of the virtual resource b corresponding to the service priority 4 may be set to 4. The service priority may be used to represent importance of a service, and a service of higher importance has a higher priority.

Alternatively, the priority of the virtual resource may be set to be different from a corresponding service priority. For example, a higher priority is set for the virtual resource corresponding to the service priority when the service priority is higher; and a lower priority is set for the virtual resource corresponding to the service priority when the service priority is lower.

Step 104: When a service traffic burst causes congestion of the physical resource, control, according to the priority of the virtual resource and a preset mapping relationship between the virtual resource and the sub physical resource, the sub physical resource that is used by the virtual resource.

That is, when a large quantity of services simultaneously request access and congestion of the physical resource is caused (whether the physical resource is congested may be determined according to utilization of the physical resource, and when the utilization of the physical resource is higher than a preset utilization threshold, it may be considered that the physical resource is congested, where the preset utilization threshold may be preset by the flow control apparatus according to a situation), the sub physical resource that is used by the virtual resource that is created for services with different priorities is controlled.

A specific control method may be as follows: allowing a virtual resource with a priority higher than a preset priority threshold to use a corresponding sub physical resource, and prohibiting a virtual resource with a priority lower than the preset priority threshold from using a corresponding sub physical resource; or increasing a quantity of sub physical resources that are correspondingly used by a virtual resource with a priority higher than the preset priority threshold, and decreasing a quantity of sub physical resources that are correspondingly used by a virtual resource with a priority lower than the preset priority threshold. The preset priority threshold may be preset by the flow control apparatus according to an actual situation.

The following uses an example for description. For example, when a service A requests access, a priority of the service A is 3, and there is a mapping relationship between the service priority 3 and a virtual resource c, the flow control apparatus may set a priority of the virtual resource c to 3. Then, a sub physical resource that may be originally used by the virtual resource c needs to be determined according to a mapping relationship between the virtual resource c and the sub physical resource. For example, when the physical resource is sufficient, the virtual resource c may use three sub physical resources in the preset mapping relationship, and the preset priority threshold is 4. When the physical resource is congested, these three sub physical resources may not be allowed to be allocated to the virtual resource c (because the priority of the virtual resource c is 3 and is lower than the preset priority threshold 4), or a quantity of sub physical resources that are used by the virtual resource c may be decreased. For example, only one sub physical resource is allocated to the virtual resource c, and the saved sub physical resources may be allocated to another virtual resource with a priority higher than the preset priority threshold for use. In this way, flow control is performed according to a service priority, normal running of an important service (a service with a high priority) is ensured, and system reliability is improved.

In addition, because each virtual resource may be used to independently run a service, and there is a correspondence between the virtual resource and the sub physical resource, the service may be independently run on a sub physical resource that is corresponding to a virtual resource, and mutual interference generated when multiple services simultaneously run on a same physical resource is avoided.

The following describes a flow control apparatus under an NFV architecture provided in an embodiment of the present invention. In specific implementation, the flow control apparatus may be a virtualized infrastructure manager (Virtualized Infrastructure Manager, VIM). Referring to FIG. 2, the flow control apparatus 200 in this embodiment includes:
a resource management unit 201, configured to: virtualize a physical resource into multiple virtual resources that are used to independently run services, and divide the physical resource into multiple sub physical resources, where there is a correspondence between the virtual resource and the sub physical resource;
an obtaining unit 202, configured to obtain a preset mapping relationship between a service priority and the virtual resource; and
a setting unit 203, configured to set a priority for the virtual resource according to the mapping relationship that is between the service priority and the virtual resource and that is obtained by the obtaining unit; where
the resource management unit 201 is further configured to: when a service traffic burst causes congestion of the physical resource, control, according to the priority of the virtual resource and a preset mapping relationship between the virtual resource and the sub physical resource, the sub physical resource that is used by the virtual resource.

For further understanding, the following describes in detail an interaction process between units in the flow control apparatus in this embodiment, and details are as follows:
First, the resource management unit 201 virtualizes a physical resource into multiple virtual resources that are used to independently run services, and divides the physical resource into multiple sub physical resources, where there is a correspondence between the virtual resource and the sub physical resource. The correspondence between the virtual resource and the sub physical resource may include: one virtual resource corresponds to one sub physical resource (that is, one-to-one), and/or one virtual resource corresponds to multiple sub physical resources (that is, one-to-many), and/or multiple virtual resources correspond to one sub physical resource (that is, many-to-one), and/or multiple virtual resources correspond to multiple sub physical resources (that is, many-to-many). The correspondence may be preset by the resource management unit 201, and specifically, which correspondence is to be preset may be determined according to an actual service status.

When a service requests access, and a virtual resource needs to be allocated to the service, the obtaining unit 202 obtains the preset mapping relationship between the service priority and the virtual resource, where the mapping relationship between the service priority and the virtual resource may indicate a virtual resource that can be correspondingly used by a service with a specific priority.

The setting unit 203 sets a priority for the virtual resource according to the mapping relationship that is between the service priority and the virtual resource and that is obtained by the obtaining unit 202. Specifically, the setting unit 203 may set the priority of the virtual resource to be the same as a corresponding service priority. For example, if there is a mapping relationship between a virtual resource a and a service priority 2, a priority of the virtual resource a corresponding to the service priority 2 may be set to 2; and if there is a mapping relationship between a service priority 4 and a virtual resource b, a priority of the virtual resource b corresponding to the service priority 4 may be set to 4. The service priority may be used to represent importance of a service, a priority of each service may be preset by an NFVO, and a service of higher importance has a higher priority. Alternatively, the setting unit 203 may set the priority of the virtual resource to be different from a corresponding service priority. For example, a higher priority is set for the virtual resource corresponding to the service priority when the service priority is higher; and a lower priority is set for the virtual resource corresponding to the service priority when the service priority is lower.

When a service traffic burst causes congestion of the physical resource, the resource management unit 201 may control, according to the priority that is of the virtual resource and that is set by the setting unit 203 and the correspondence between the virtual resource and the sub physical resource, the sub physical resource that is used by the virtual resource. A specific control method may be as follows: allowing, by the resource management unit 201, a virtual resource with a priority higher than a preset priority threshold to use a corresponding sub physical resource, and prohibiting a virtual resource with a priority lower than the preset priority threshold from using a corresponding sub physical resource; or increasing, by the resource management unit 201, a quantity of sub physical resources that are correspondingly used by a virtual resource with a priority higher than a preset priority threshold, and decreasing a quantity of sub physical resources that are correspondingly used by a virtual resource with a priority lower than the preset priority threshold. The preset priority threshold may be preset by a resource management apparatus according to an actual situation.

Whether the physical resource is congested may be determined according to utilization of the physical resource. When the utilization of the physical resource is higher than a preset utilization threshold, it may be considered that the physical resource is congested; when the utilization of the physical resource is not higher than the preset utilization threshold, it is considered that the physical resource is sufficient. The preset utilization threshold may be preset by the flow control apparatus according to a situation. When the physical resource is sufficient, flow control may not be performed on the service that requests access, and all services are allowed to access.

For brevity of description, for a process that is not described in detail in this embodiment, refer to descriptions of the foregoing method embodiment.

In this embodiment, there is a mapping relationship between a service priority and a virtual resource, and a setting unit may set a priority for the virtual resource according to the mapping relationship. There is a correspondence between the virtual resource and a sub physical resource, and when a service traffic burst causes congestion of the physical resource, a resource management unit may control, according to the correspondence between the virtual resource and the sub physical resource and the priority of the virtual resource, the sub physical resource that is used by the virtual resource. In this way, flow control based on a service priority is implemented, and a problem that it is difficult to directly perform flow control according to a service priority because an underlying resource cannot perceive a service after layers of an NFV system are decoupled is resolved; and normal running of an important service can be ensured, and system reliability can be improved. In addition, because each virtual resource may be used to independently run a service, and services may be separated from each other when the services run on a sub physical resource corresponding to a virtual resource, mutual interference generated when multiple services simultaneously run on a same physical resource is avoided.

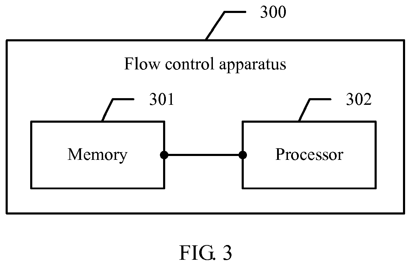

Referring to FIG. 3, another embodiment of a flow control apparatus in the present invention includes a memory 301 and a processor 302, where the processor 302 executes a software program that is stored in the memory 301, so as to:
virtualize a physical resource into multiple virtual resources that are used to independently run services, and divide the physical resource into multiple sub physical resources, where there is a correspondence between the virtual resource and the sub physical resource;
obtain a preset mapping relationship between a service priority and the virtual resource;
set a priority for the virtual resource according to the mapping relationship between the service priority and the virtual resource; and
when a service traffic burst causes congestion of the physical resource, control, according to the priority of the virtual resource and the correspondence between the virtual resource and the sub physical resource, the sub physical resource that is used by the virtual resource.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementations, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure used to achieve a same function may be of various forms, for example, in a form of an analog circuit, a digital circuit, a dedicated circuit, or the like. However, as for the present invention, software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

The foregoing describes in detail a flow control method and apparatus under an NFV architecture according to the appended claims of the present invention, and a person of ordinary skill in the art may make a change to a specific implementation and an application scope according to the idea of the example embodiments of the present invention, and therefore, content of this specification should not be understood as a limitation on the present invention.

## Claims

1. A flow control method performed by a virtualized infrastructure manager, VIM, under a network functions virtualization, NFV, architecture, comprising:
• virtualizing (101) a physical resource into multiple virtual resources that are used to independently run services, and dividing the physical resource into multiple sub physical resources, wherein, for each virtual resource among the multiple virtual resources there is a correspondence between the virtual resource and at least one sub physical resource among the multiple sub physical resources, wherein the physical resource is one of a computing resource, a storage resource or a network resource;
• obtaining (102), for each virtual resource, a preset mapping relationship between a service priority and the virtual resource from a network function virtualization orchestrator, NFVO;
• setting (103), for each virtual resource, a priority for the virtual resource according to the preset mapping relationship between the service priority and the virtual resource; and
• when a service traffic burst causes congestion of the physical resource, increasing a quantity of sub physical resources that are correspondingly used by a virtual resource with a priority higher than a preset priority threshold, and decreasing a quantity of sub physical resources that are correspondingly used by a virtual resource with a priority lower than the preset priority threshold.

2. The method according to claim 1, wherein the correspondence between the virtual resource and the at least one sub physical resource comprises:
one virtual resource corresponds to one sub physical resource, or one virtual resource corresponds to multiple sub physical resources, or multiple virtual resources correspond to one sub physical resource, or multiple virtual resources correspond to multiple sub physical resources.

3. The method according to claim 1, wherein the setting, for each virtual resource, the priority for the virtual resource according to the preset mapping relationship between the service priority and the virtual resource comprises:
setting the priority of the virtual resource to be the same as a corresponding service priority.

4. A virtualized infrastructure manager, VIM, under a network functions virtualization, NFV, architecture, wherein the VIM is configured and intended to perform any of the methods according to claims 1-3.

## Patentansprüche

1. Flusssteuerungsverfahren, das von einem virtualisierten Infrastrukturmanager, VIM, unter einer Netzwerkfunktionsvirtualisierungs(NFV)-architektur durchgeführt wird, umfassend:
• Virtualisieren (101) einer physischen Ressource in mehrere virtuelle Ressourcen, die verwendet werden, um unabhängig Dienste auszuführen, und Aufteilen der physischen Ressource in mehrere physische Teilressourcen, wobei für jede virtuelle Ressource unter den mehreren virtuellen Ressourcen eine Korrespondenz zwischen der virtuellen Ressource und mindestens einer physischen Teilressource unter den mehreren physischen Teilressourcen vorhanden ist, wobei die physische Ressource eine einer Rechenressource, einer Speicherressource oder einer Netzwerkressource ist;
• Erhalten (102) für jede virtuelle Ressource eines vorab festgelegten Zuordnungsverhältnisses zwischen einer Dienstpriorität und der virtuellen Ressource von einem Netzwerkfunktionsvirtualisierungsorchestrator, NFVO;
• Festlegen (103) für jede virtuelle Ressource einer Priorität für die virtuelle Ressource gemäß dem vorab festgelegten Zuordnungsverhältnis zwischen der Dienstpriorität und der virtuellen Ressource; und
• wenn ein Diensttrafficburst eine Überlastung der physischen Ressource bewirkt, Erhöhen einer Menge an physischen Teilressourcen, die entsprechend von einer virtuellen Ressource mit einer Priorität, die höher als ein vorab festgelegter Prioritätsschwellenwert ist, verwendet werden, und Verringern einer Menge an physischen Teilressourcen, die entsprechend von einer virtuellen Ressource mit einer Priorität, die geringer als der vorab festgelegte Prioritätsschwellenwert ist, verwendet werden.

2. Verfahren nach Anspruch 1, wobei die Korrespondenz zwischen der virtuellen Ressource und der mindestens einen physischen Teilressource Folgendes aufweist:
eine virtuelle Ressource entspricht einer physischen Teilressource oder eine virtuelle Ressource entspricht mehreren physischen Teilressourcen oder mehrere virtuelle Ressourcen entsprechen einer physischen Teilressource oder mehrere virtuelle Ressourcen entsprechen mehreren physischen Teilressourcen.

3. Verfahren nach Anspruch 1, wobei das Festlegen für jede virtuelle Ressource der Priorität für die virtuelle Ressource gemäß dem vorab festgelegten Zuordnungsverhältnis zwischen der Dienstpriorität und der virtuellen Ressource Folgendes umfasst:
derartiges Festlegen der Priorität der virtuellen Ressource, dass sie dieselbe wie eine entsprechende Dienstpriorität ist.

4. Virtualisierter Infrastrukturmanager, VIM, unter einer Netzwerkfunktionsvirtualisierungs(NFV)-architektur, wobei der VIM konfiguriert und vorgesehen ist, um eines der Verfahren nach den Ansprüchen 1-3 durchzuführen.

## Revendications

1. Procédé de contrôle de flux réalisé par un gestionnaire d'infrastructure virtualisée (VIM) sous une architecture de virtualisation de fonctions de réseau (NFV), consistant à :
virtualiser (101) une ressource physique en de multiples ressources virtuelles qui sont utilisées pour exécuter des services indépendamment, et diviser la ressource physique en de multiples sous-ressources physiques, une correspondance existant, pour chaque ressource virtuelle parmi les multiples ressources virtuelles, entre la ressource virtuelle et au moins une sous-ressource physique parmi les multiples sous-ressources physiques, la ressource physique étant une ressource informatique ou une ressource de stockage ou une ressource de réseau ;
obtenir (102), pour chaque ressource virtuelle, une relation de correspondance prédéfinie entre une priorité de service et la ressource virtuelle, à partir d'un orchestrateur de virtualisation de fonctions de réseau (NFVO) ;
régler (103), pour chaque ressource virtuelle, une priorité pour la ressource virtuelle selon la relation de correspondance prédéfinie entre la priorité de service et la ressource virtuelle ; et
quand une rafale de trafic de services provoque une congestion de la ressource physique, augmenter un nombre de sous-ressources physiques qui sont utilisées respectivement par une ressource virtuelle avec une priorité supérieure à un seuil de priorité prédéfini, et réduire un nombre de sous-ressources physiques qui sont utilisées respectivement par une ressource virtuelle avec une priorité inférieure à un seuil de priorité prédéfini.

2. Procédé selon la revendication 1, dans lequel la correspondance entre la ressource virtuelle et l'au moins une sous-ressource physique consiste en ce que :
une ressource virtuelle correspond à une sous-ressource physique, ou une ressource virtuelle correspond à de multiples sous-ressources physiques, ou de multiples ressources virtuelles correspondent à une sous-ressource physique, ou de multiples ressources virtuelles correspondent à de multiples sous-ressources physiques.

3. Procédé selon la revendication 1, dans lequel le réglage, pour chaque ressource virtuelle, de la priorité pour la ressource virtuelle selon la relation de correspondance prédéfinie entre la priorité de service et la ressource virtuelle, consiste à :
régler la priorité de la ressource virtuelle de sorte qu'elle soit identique à une priorité de service correspondante.

4. Gestionnaire d'infrastructure virtualisée (VIM) sous une architecture de virtualisation de fonctions de réseau (NFV), le VIM étant configuré et prévu pour réaliser l'un quelconque des procédés selon les revendications 1 à 3.
